# EUROPEAN PATENT APPLICATION

(11) **EP 1 698 379 A1**
(43) Date of publication of application: **06.09.2006**
(21) Application number: 06004190.2
(22) Date of filing: 02.03.2006
(51) Int. Cl.: A63B 57/00

(54) **An apparatus for drilling a hole and a method for its application**

(30) Priority: 02.03.2005 DK 200500318
(71) Applicant: Hansen, Finn Skade, 8800 Viborg (DK)
(72) Inventor: Hansen, Finn Skade, 8800 Viborg (DK)
(74) Representative: Nielsen, Leif

(57) **Abstract**

The invention relates to an apparatus (1) for drilling a hole, preferably in a golf green, including a handle (2), a circular tubular cutter head (12) with a lower toothing, a drive motor, control means (3) for the cutter head (12) and means (15) for driving out an earth plug from the cutter head (12), where the handle (2) are connected with an upper part of the control means (3), and where the drive motor is connected with the cutter head (12) via a shaft, wherein the means (15) for driving out an earth plug from the cutter head (12) comprises a number of steering guides (16), which at an upper end part are connected to a retainer plate (5) of the control means (3), and a plate (17), which is arranged inside the cutter head (12) and is connected to a lower end part of the steering guides (16) via a bridge connector (18).

The invention furthermore concerns a method for drilling a hole and replacing a drilled plug of earth using an apparatus (1) according to the invention.

## Description

### Field of the invention

The present invention relates to an apparatus for drilling a hole, preferably in a golf green, including a handle, a circular tubular cutter head with a lower toothing, a drive motor, control means for the cutter head and means for driving out an earth plug from the cutter head, where the handle is connected with an upper part of the control means, and where the drive motor is connected with the cutter head via a shaft.

The invention furthermore relates to a method for drilling a hole and replacing a drilled plug of earth using an apparatus according to the invention.

### Background of the invention

In the golf sport, it is important that the golf courses are in the best possible condition in order that the golf players get the best possible conditions. Therefore, the green keepers are maintaining the golf course in the best possible condition, i.e. the fairway is mowed, the semi rough is tended, and greens get special treatment.

In order to make the golf play more interesting and varying, the holes are moved on the green several times a week on a normal golf course, whereas the holes on greens for a tournament may be moved every day. This entails doing a time-consuming work, e.g. on an 18-hole golf course, of moving 18 holes every morning so that the golf course is ready for the golf players of the day.

The work with moving the holes has to be done carefully as the existing holes are to be filled with plugs of earth from a new, drilled hole, so that the green of the golf course still has a uniform surface. This means that plugs of earth, which are drilled out, are to have the same length as an existing hole, whereby it is avoided applying soil at the bottom of the hole, or that the new earth plug having to be cut off in length.

The present inventor has presented such a new and inventive apparatus in WO2004/080545, where this apparatus, by a reciprocating turning movement of the cutter head, is able to perform secure, simple and rapid drilling of uniform holes and to eject a drilled-out earth plug into an existing hole.

Prototype and field tests have shown some drawbacks of this apparatus. For example, the ejection system of the apparatus is complicated and not simple enough to operate, the weight of the apparatus is too high, and the manufacturing costs of the apparatus are too high.

### Object of the invention

It is therefore the object of the present invention to provide an improved apparatus for drilling a hole, preferably in a golf green, which has lower manufacturing costs, which has a lower weight and which is very easy to operate during the drilling process and which has a simple and easily operated ejection arrangement for the ejection of a drilled-out earth plug into an existing hole.

This is obtained by an apparatus as described in the preamble of claim 1 and where the means for driving out an earth plug from the cutter head comprises a number of steering guides, which at an upper end part are connected to a retainer plate of the control means, and a plate, which is arranged inside the cutter head and is connected to a lower end of the steering guides via a bridge connector.

A further object of the invention is to provide a method for drilling a hole and possibly ejecting a drilled earth plug into an existing hole by means of the apparatus according to the present invention.

### Description of the invention

The control means of the apparatus is used for steering the circular tubular cutter head during the drilling process. In order to ensure that the hole becomes an exact circular hole with sharp edges, the control means of the apparatus is connected to a tread plate at its lower part.

By placing the tread plate on the earth and standing on the tread plate, the green keeper will counteract the rotary forces arising when the cutter head rotates and is pressed down into the earth.

In order to drill a vertical hole so that the cup is always in a vertical position and the flag placed in the cup will stand vertically from the hole, the control means are angularly adjustably connected with the tread plate. Hence if the green is sloping slightly at the spot where the new hole is to be drilled, the angularly adjustable lower parts of the tread plate are adjusted so that the cutter head will be vertically positioned during the drilling process.

In order to ensure that the angularly adjustable parts remain in the desired angle during the entire drilling process, they are provided with a locking arrangement, whereby it is possible to adjust and lock the angularly adjustable parts in an arbitrary angle, depending on the degree of slope of the green.

The handle is connected to the control means via a number of retainer plates which furthermore comprise or are connected to the means for driving out an earth plug from the cutter head and the drive motor.

The means for driving out an earth plug from the cutter head comprises a number of steering guides, which at an upper end part are connected to a retainer plate of the control means, and a plate, which is arranged inside the cutter head, and connected to a lower end of the steering guides via a bridge connector.

The basic principle behind the means for driving out an earth plug from the cutter head is that the plate is placed inside the cutter head and is connected to the tread plate via the bridge connector, the steering guides, the retainer plate and the control means whereby the plate and the tread plate maintained are in a mutually fixed position, and hence it is the cutter head that is moved during the drilling process.

The steering guides will ensure that the plate is preferably stable during the drilling process and will, due to the connection to a retainer plate of the control means, ensure that the hole is drilled correctly and vertically.

The bridge connector allows the plate to counteract minor height differences of the green (top of the drilled earth plug), because the bridge connector is connected to the plate with a flexible connection member, for example a cone bolt or the like, which allows the plate to tilt and rotate.

For ensuring easy and secure ejection of a drilled-out earth plug into an existing hole the steering guides are connected to the retainer plate with an arrangement for allowing vertical movement of the plate during the drilling of a hole. The arrangement will ensure that the plate can be vertically moved due to the elongation of the earth-plug when it is moved up into the cutter head during the drilling process.

In one embodiment of the present invention the arrangement comprises a spring, hence each steering guide is connected to the retainer plate with a spring, which will be compressed slightly during the drilling process because the plate are positioned on the top of the earth plug and forced upwards. During the ejection of the drilled earth plug the compressed spring will effect a downward force on the plate and hence contribute to the ejection of the earth plug.

In an alternative embodiment of the present invention the arrangement comprises a lock which retains the plate to a retainer plate and/or the control means during the drilling process.

In another alternative embodiment of the present invention, the arrangement comprises a hydraulic or a pneumatic system which during the drilling process can allow a vertical movement of the plate due to the fact that the plate is positioned on top of the earth plug.

The arrangement for allowing a vertical movement of the plate positioned on top of the earth-plug is necessary due to the fact that the elongation of the earth plug occurs during the drilling process, and the earth plug is retained inside the cutter head. To avoid that the plate compresses the earth plug and thereby blocks the cutter head and prevents the release of the earth plug, the arrangement allows a vertical movement of the plate; hence it is always placed on top of the earth plug, but follows the elongation of the earth-plug.

To reduce the weight of the apparatus, the ejection system is simplified compared to WO2004/080545 and hence does not consist of several heavy parts. Furthermore, the handle is provided in a light-weight material such as plastic, light-metal alloys, glass fibres, or the like which can be moulded or extruded.

The tread plate may have different shapes, but must have a size so that it is possible to step on it with at least one foot, preferably both feet, and so that it is possible to connect the angularly adjustable lower parts of the control means in an area around an opening in the tread plate.

Since it is important that the tread plate is secured during the entire drilling process so that the hole is drilled exactly, the tread plate is designed with a number of non-skid fields. These fields may be formed by applying e.g. a rubber material or by machining the surface of the tread plate. The non-skid fields imply that it is possible to stand fast on the tread plate in every kind of weather.

This opening in the tread plate corresponds approximately in diameter to the diameter of the cutter head, so that the opening in the tread plate contributes to controlling the cutter head when pressed down into the earth.

Alternatively a cutout is provided in the tread plate whereby this cutout can function as a guide for a part of the outer side of the cutter head when pressing the cutter head down into the earth.

The handle is provided with at least one hand gripping portion whereby the green keeper can operate the apparatus. The hand gripping portion can be covered with a soft and nice-to-touch protection material for the protection of the green keepers' hands or the handle can for example be ergonomically shaped.

In order to achieve an optimum cutting effect, the cutter head is connected with a drive device that is arranged to transform the rotation of the drive motor into a reciprocating turning movement of the cutter head.

By the cutter head having a reciprocating, turning movement instead of a unidirectional rotation, it is possible to drill holes with more smooth sides. If the cutter head hits pebbles with a reciprocating turning movement, the stones will be moved away from the toothing of the cutter head, whereby the cutter head will not be put out of its course.

A reciprocating movement of the cutter head furthermore causes the earth plug to become less compressed inside the cutter head in relation to an earth plug cut out with a cutter head with unidirectional rotation. Hence it is easier to have the earth plug replaced in an existing hole, and at the same time, the grass on the earth plug will have greater possibility of growing again as the roots of the grass are having better conditions in a relatively loose plug of earth.

In order to achieve this reciprocating turning movement of the cutter head, the drive device connecting the drive motor and the shaft is a connecting rod arrangement that includes an eccentric drive with a number of holes positioned with different spacing from the rotary shaft of the drive motor, a connecting rod, and a connecting rod head which is adapted for receiving an end part of the connecting rod.

By using an eccentric drive with a number of holes with different spacing for the rotary shaft of the drive motor, it is possible to determine the amplitude of the reciprocating turning movement of the cutter head so that it becomes possible to adjust the cutting movement of the cutter head in relation to:
- different types of earth, e.g. clay or sand, and/or
- the texture of the earth, e.g. wet or dry earth.

Furthermore, when the cutter head is slowly worn down, it will also be an advantage if the centre of rotation of the connecting rod on the eccentric drive possibly can be moved so that the toothing of the cutter head is provided a greater turning movement in order to ensure that the earth plug is cut completely free.

When worn down, the cutter head will typically be sharpened again so that in principle, it is only adjusted in relation to the earth conditions.

Typically, the connecting rod will be connected with the eccentric drive in a certain hole decided by the green keeper's knowledge about the types of earth of which the golf course consist, and this setting is only changed a couple of times in the course of a golf season.

By using a connecting rod and a connecting rod head, it is possible to transform the rotation of the drive motor into a reciprocating turning movement of the cutter head. The connecting rod head is shaped with a cutout/groove which is adapted for being received in an end part of the connecting rod, which is a normal concept for a connecting rod/connecting rod head arrangement. In order to transmit the rotation of the drive motor, there is to be space for the connecting rod to go in over parts of the connecting rod head.

An alternative to using a connecting rod arrangement for transforming the rotation of the drive motor into a reciprocating turning movement of the cutter head is that the drive motor is provided with an electronic control unit that may control the direction of rotation of the drive motor. The advantage of electronic control is that a direct transition from drive motor to cutter head can be used.

Since by using a drive device like a connecting rod arrangement a rotating cyclic movement occurs whereby the forces to be absorbed in the control means are produced, retainer plates for the control means are provided around the drive device.

These retainer plates are exchangeable, implying that it is easy to manufacture the apparatus as the control means are assembled with the retainer plates that may be clamped onto the control means.

In an embodiment of the present invention, these retainer plates are designed so that they are divided into several parts that each are provided with apertures fitting to the control means.

The parts of the retainer plate are clamped around the tube sections with e.g. pointed screws or the like, so that the retainer plate is secured and may absorb the rotational forces.

In order to protect the connecting rod arrangement, which is typically positioned between two retainer plates, the retainer plates are provided with a detachable shielding extending around the entire outer edge of the retainer plates. The shielding further ensures that no rotating parts are immediately accessible whereby a more safe apparatus is achieved.

Alternatively, the retainer plates are designed with a through-going hole communicating with a groove that runs from an edge of the retainer plate and in to the through-going hole so that the profile tube of the control means is arranged through the hole on the retainer plate and is clamped by a pointed screw or the like being screwed transversely to the groove.

The connecting rod arrangement and drive device described above may be of the type described in the above mentioned WO2004/080545. The content thereof is hereby incorporated by reference.

In order to avoid the drawbacks connected to a gas/diesel powered drive engine which must be filled up repeatedly and is polluting, the drive motor is electrically powered whereby the green keeper can use the apparatus without wearing hearing protector and can walk undisturbed on the golf course and drill the holes and without disturbing the golf players while e.g. golf is played on an adjacent hole.

To supply the drive motor with electricity and in order to avoid drawing cables to the remotest greens, which is almost impossible on a golf course, a number of batteries are arranged in connection with the handle and/or the controlling means, and an activation button for activating the drive motor is provided.

The batteries may either be of the kind which can be recharged so that the green keeper, when he or she has been around drilling new holes on the 18 hole course, may take the batteries home to the workshop and e.g. set them for recharging so that the apparatus is ready for use the next time, or the batteries can be of the kind which are used once and then replaced.

In order to protect the green keeper when drilling a hole, the tread plate at one side of the opening is provided with a protecting means. This protecting means is to prevent the green keeper from getting his feet into close contact with the rotating cutter head, so that injuries are avoided.

The protecting means may be a bracket shaped with the same profile as the lower parts of the control means, or be a guard edge mounted on the tread plate, so that it is impossible to get the feet in over the hole. When drilling holes in wet and bad weather, such a guard edge may furthermore protect the green keeper's footwear/clothing against splashes of mud and water.

Alternatively, the protecting means can be a plate arrangement that e.g. includes two curving plates separated by a number of spacers, where the separate sides of the plates guard the green keeper from the opening in the tread plate. A further alternative may be a moulded protecting means.

Apart from protecting, the sturdy construction with plates contributes to reinforcing the lower parts of the control means so that it is possible to absorb the rotary forces from drilling a hole.

After the hole has been drilled, there will be an earth plug in the cutter head which either is to be discarded or to be replaced in an existing hole.

The cutter head is designed so that upwards it is fastened to a shaft on which there is a fastening arrangement on which the upper, tubular part of the cutter head can be mounted. The mounting of the cutter head can be done with e.g. screws, bolts or the like.

This fastening arrangement does not cover the entire tubular earth opening in the cutter head, implying that the operator can see down on the plate or on a part of the earth plug. The possibility of seeing the earth plug is e.g. used to place the earth plug in the correct position when placed in an existing hole, so that e.g. the direction of the grass is approximately the same for the earth plug as for the surrounding green.

In order to determine/adjust the depth of the drilled hole, stop means have been provided on the lower parts of the control means, e.g. a split pin, bushings and/or pipe sockets. The functions of the stop means are to prevent that the hole does not become too deep.

The stop means may e.g. be a split pin wherein the lower parts of the control means are provided with a number of holes in which the split pin is placed. However, this implies that it is only possible to drill holes of a predetermined depth.

Alternatively, the stop means can be bushings, which are clamped around the control means with screws or the like, or pipe sockets having a length corresponding to the control means minus the length corresponding to the desired depth of the hole. These pipe sockets are made of a pipe section which is placed around control means.

As alternative to the stop means being provided in connection with the control means, the stop means can be provided in connection with the lowermost of the retainer plates. Such a stop means can be a bolt/screw which is screwed up into a thread in the lowermost of the retainer plates. The length of the part of the stop means located below the lowermost retainer plate determines how far down the cutter head can come, since a lower part of the stop means will bear against either the upper side of the protecting means or the tread plate when the upper parts of the control means are passed down over the lower part of the control means.

Instead of using a vehicle for transporting himself and the apparatus around on the golf course, the green keeper may choose to walk around, as the tread plate is provided with a number of wheels or rollers enabling the green keeper to transport the apparatus by tipping the tread plate and then pushing or pulling the entire apparatus to the next hole to be drilled. The wheels or rollers with which the apparatus is provided are to be a wide as possible or of a type ensuring that the deadweight of the apparatus does not make marks in the green.

The apparatus can be provided with a number of spirit levels, whereby the green keeper during the entire drilling can monitor whether the hole is drilled vertically. Alternatively, the spirit levels can be placed in connection with the lower parts of the control means and/or on the protecting means around the opening in the tread plate.

To be able to drill the hole in a correct position, the apparatus can be provided with a Global Position System unit. In tournaments it is important to know the exact position of the holes because the positions of the holes are used for example in computer graphic for TV viewers and in course guides for the golf players.

A Global Position System unit (GPS unit) on the apparatus can replace the use of spray paint for marking the place on the green where the hole is to be drilled, hence it is more environment-friendly and it is not necessary to have an official spending time for marking the greens. Thus, before the green keeper starts his work of drilling holes on the golf course, he will have the exact positions of all new holes available.

In order to use an apparatus for drilling a hole, the drilling of the hole must be performed in the following steps:
- The tread plate with angularly adjustable lower parts of the control means are placed on the position where the hole is to be drilled;
- the handle is adjusted so that the cutter head becomes vertically positioned, as the operator places one or both of his feet on the tread plate;
- the drive motor is activated, and a reciprocating cutter movement of the cutter head is started;
- by moving the handle downwards, the operator presses the cutter head down into the earth until a desired depth has been reached, and the drive motor is stopped;
- the apparatus is lifted so that the cutter head containing the drilled plug of earth is lifted off the ground.

When the green keeper has decided where the new hole is to be placed, the tread plate with the lower parts of the angularly adjustable control means is positioned so that it is possible to allow for the inclination of the green and thereby to achieve that the cutter head stands vertically when the drilling is commenced.

The apparatus is adjusted, e.g. with fitted spirit levels, so that the cutter head is positioned vertically.

In order to ensure that the apparatus is maintained in the desired position and to reduce the rotary actions from the apparatus during drilling, the green keeper places one or both of his feet on the tread plate so that he holds the tread plate in the desired position by his own weight, thereby counteracting the rotation caused by the reciprocating turning movement of the cutter head.

By using a tread plate it is furthermore prevented that the surrounding areas of the hole are compressed while hole is drilled. Compression may contribute to destroying the area and make it uneven so that it is difficult to perform putting along the ground with a golf ball. The large surface area of the tread plate provides the pressure from green keeper and apparatus to be distributed evenly on a larger area, whereby the area is spared against unwanted indentations and treading marks.

By moving the handle downwards during the reciprocating turning movement of the cutter head, the operator is able to press the cutter head down into the earth until a desired depth has been reached, and the drive motor is stopped.

Due to the low weight of the apparatus it is now possible for the green keeper to lift the apparatus so that the cutter head containing the drilled plug of earth is lifted off the ground.

It is important that the apparatus is lifted vertically up, since a to-and-from movement with the apparatus for getting the cutter head containing the earth plug up from the earth causes the hole to be either oval or formation of a volcanic build-up around the hole, and thereby it is difficult to fit a putting cup down into the hole.

If this earth plug, which has just been drilled from a hole, is to be replaced in an existing hole, the above method is added the following further steps:
- the apparatus is positioned vertically above an existing hole so that at least the lower part of the cutter head protrudes down into the existing hole and the operator places one or both of his feet on the tread plate;
- by moving the handle upwards the plate will eject the earth plug into the existing hole;
- the apparatus is removed and the surface of the earth plug is fine-adjusted with the surrounding green.

When the apparatus have been lifted off, the cutter head is placed down into the existing hole. It may be an advantage that a part of the cutter head is placed down into the hole so that the earth plug is led directly down into the hole, instead of there being a risk that the lowermost parts of the earth plug hit the edge of the hole.

In order to get the earth plug placed in the existing hole, the handle is moved upwards and the plate will then press down on the top of the drilled out earth plug and thereby eject the earth plug into the hole.

Because the earth plug extends its length during the drilling process and needs time to fill out the existing hole, is it important that the plate do not cause the earth plug to eject at the same speed as the one by which the cutting head is removed from the hole.

When the earth plug has been placed, the upper part of the apparatus is lifted away, and the green keeper finishes the area around the replaced earth plug with e.g. a little sand which advances the growing together of the grass on the earth plug and the surrounding green, so that there are no signs of a golf hole having been on that spot.

The reason for the importance of the earth plug to fit exactly down into an existing hole is firstly that the green of the golf course will not sink on certain places where holes have been previously, and that the grass growing there will much easier take roots again if there are no air holes under or beside the earth plug.

In case the apparatus is used in very moist earth, it may occur that the earth plugs, when removed, are forming a vacuum so that it becomes very difficult to lift the upper part of the control means free from the lower parts, since the vacuum in the earth will suck back the earth plug. Therefore, for releasing the earth plug from cutter head, a special airing and/or ejecting arrangement can be used, which possibly may consist of an external hand tool.

An airing arrangement may have one or more jabbing members that may be pressed down into the earth plug so that access of air to the underside of the earth plug is created, whereby the vacuum effect is considerably reduced, and it will be possible to pull the cutter head up from the earth. In an embodiment of the invention, the jabbing member is a spear which e.g. can be fitted on the apparatus so that it is ready at the hand of the green keeper all the time.

Alternative to a such special airing arrangement, which is mounted directly on the apparatus, may be that an external hand tool is used, as e.g. a broken golf club that can be stuck down through the upper opening of the cutter head and past the plate placed inside the cutter head and thereby form access of air to the underside of the earth plug.

In the above, the apparatus is described for drilling holes in a green on a golf course, but the invention may furthermore find application in other areas where drilling of holes at a certain depth is desired. This may e.g. be by placing fence posts, placing foundation piles, planting trees and/or placing poles for e.g. mailboxes and the like.

Alternative to a cutter head with toothing can be a cutter head with straight edge entailing a straight cutout at the bottom of the earth hole.

### Short description of the drawing

The invention is explained in more detail in the following with reference to the accompanying drawing where:
Fig. 1 shows an apparatus according to the invention,
Fig. 2 shows the use of the apparatus in Fig. 1,
Fig. 3 shows the means for driving out an earth plug from the cutter head, and
Fig. 4 shows a partial exploded view of a slightly modified embodiment for an apparatus according to the invention.

### Detailed description of the invention

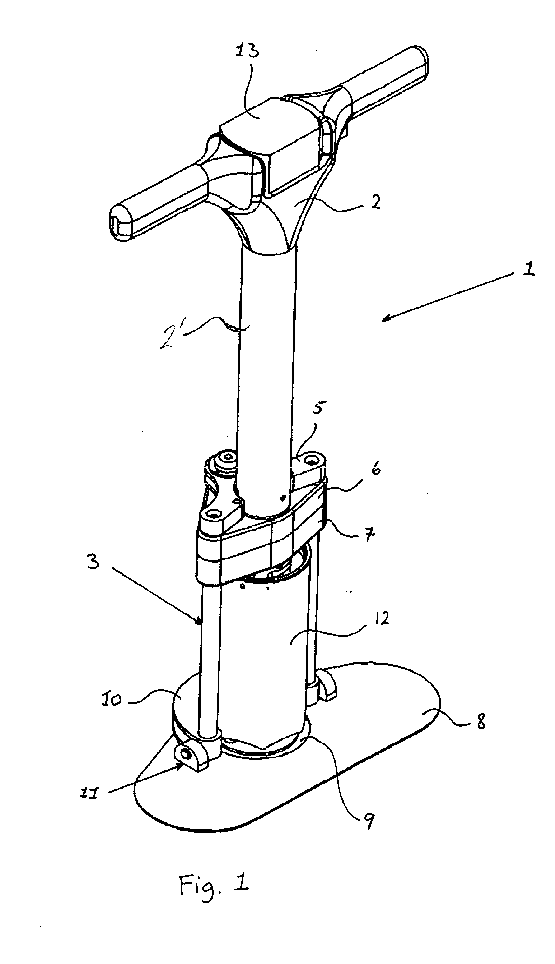

Fig. 1 shows a new and improved apparatus 1 according the present invention and which comprises a handle 2 with a centrally arranged battery element 13, control means 3 with retainer plates 5,6,7, a tread plate 8 with an opening 9, a protecting means 10, angle adjustment means 11, and a cutter head 12.

The retainer plates 6,7 are adapted to slide along the control means 3 during the drilling process.

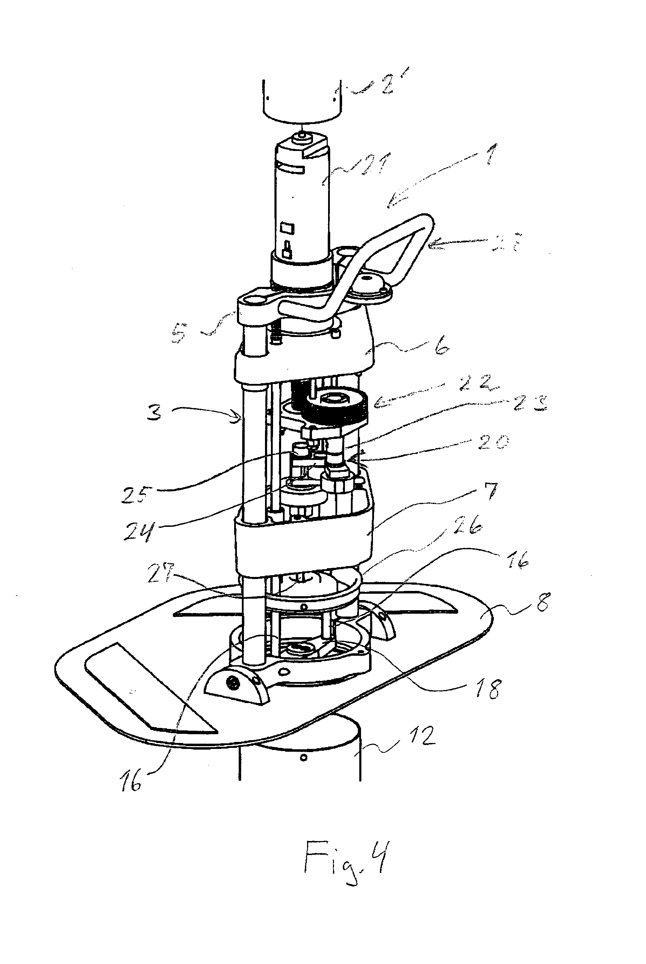

The handle 2 is connected with a shaft 2' constituting a housing for a drive motor 21 and connecting the handle with a central retainer plate 6. Between the central retainer plate 6 and the lowermost retainer plate 7, a connecting rod arrangement 20 and a gearing arrangement 22 (see Fig. 4) is disposed. The gearing arrangement 22 and the connecting rod arrangement 20 connect the drive motor 21 (see Fig.4) housed in the shaft 2' with the cutter head 12 and provide for transforming the rotation of the drive motor 21 into a reciprocating turning movement of the cutter head 12.

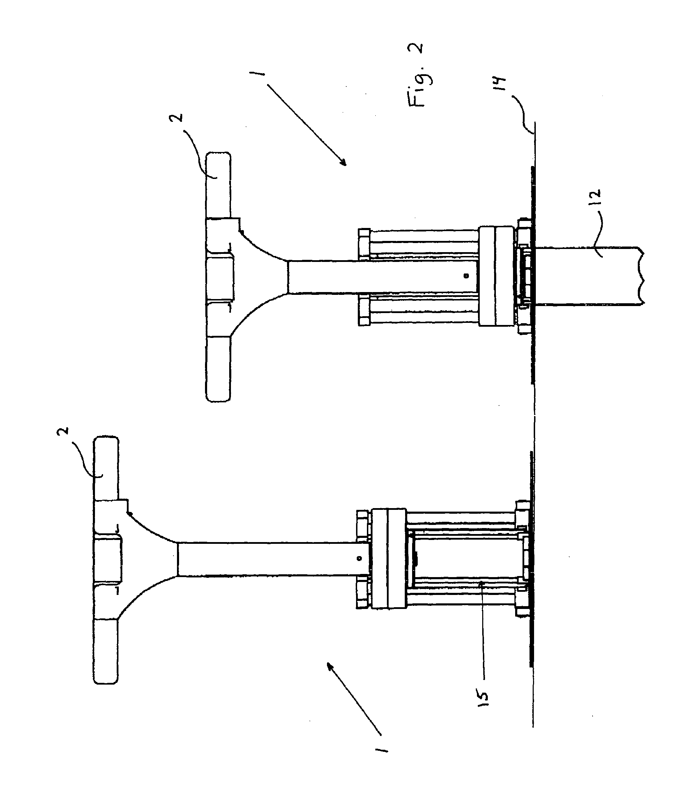

Fig. 2 shows the apparatus 1 in the following positions:
- A first position, where the tread plate 8 is placed on the green 14 and the means 15 for driving out an earth plug (not shown) from the cutter head 12 is visible.
- A second position, where the cutter head 12 is pressed down into the green 14, due to a downwards movement of the handle 2 and the reciprocating turning movement of the cutter head 12.

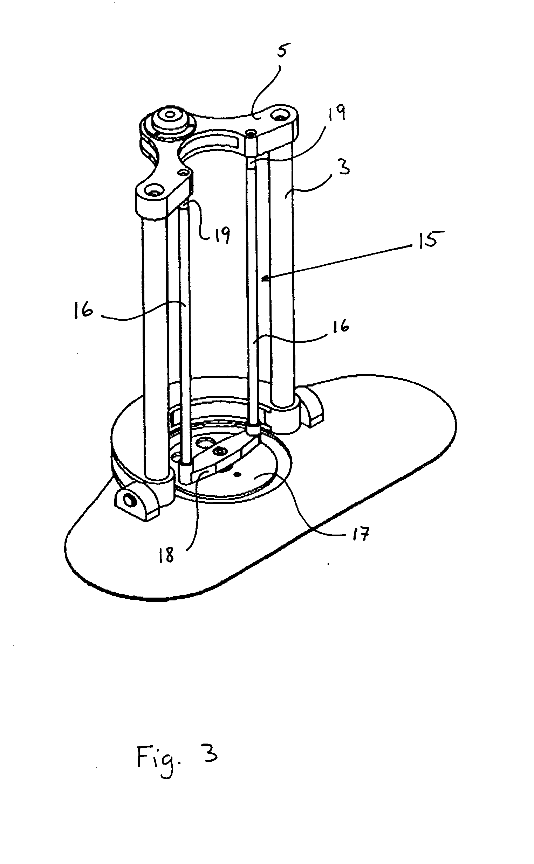

Fig. 3 shows the means 15 for driving out an earth plug (not shown) from the cutter head (not shown) where the means 15 comprises steering guides 16, which at an upper end part are connected to retainer plate 5 of the control means 3, and a plate 17, which is arranged inside the cutter head (not shown), and connected to a lower end part of the steering guides 16 via a bridge connector 18.

In the shown embodiment each steering guide 16 is connected to the retainer plate 5 with a spring 19, which ensures that the plate 17 can be moved vertically for allowing the elongation of the earth plug inside the cutter head.

Fig 4 shows the connecting rod arrangement 20 which includes an eccentric drive 23 that is connected with one end of a connecting rod 24, where this connecting rod 24 in the other end is connected to a connecting rod head 25.

In the connecting rod head 25 a groove is designed so that the connecting rod 24 can be accommodated in the connecting rod head 25 when the rotation from the drive motor 21 is to be transformed by means of the connecting rod arrangement 20 into a reciprocating movement of the cutter head 12.

In order to connect the connecting rod arrangement 20 with the cutter head 12, there is provided a holder arrangement 26 connected to the connecting rod head 25 via a shaft 27. It is possible to mount the cutter had 12 on the shaft 27 by means of screws or rivets.

The eccentric drive 23 is provided with the holes (not shown) that each have a different spacing to the rotary shaft (not shown) of the drive motor 21. The connecting rod 24 may thereby be mounted in different holes (not shown) so that the rotation from the drive motor 21 can be transformed into different reciprocating turning movements of the cutter head (not shown).

The apparatus illustrated in Fig. 4 is modified slightly in that it comprises a further handle 28 fixed on the upper retainer plate 5. This makes it easier to handle the apparatus.

In general reference is made to WO 2004/080545 to more clearly see the construction for the connecting rod arrangement and other details of the apparatus.

## Claims

1. An apparatus (1) for drilling a hole, preferably in a golf green, including a handle (2), a circular tubular cutter head (12) with a lower toothing, a drive motor, control means (3) for the cutter head (12) and means (15) for driving out an earth plug from the cutter head (12), where the handle (2) are connected with an upper part of the control means (3), and where the drive motor is connected with the cutter head (12) via a shaft, **characterized in that** the means (15) for driving out an earth plug from the cutter head (12) comprises a number of steering guides (16), which at an upper end part are connected to a retainer plate (5) of the control means (3), and a plate (17), which is arranged inside the cutter head (12) and is connected to a lower end part of the steering guides (16) via a bridge connector (18).

2. An apparatus (1) according to claim 1, **characterized in that** the steering guides (16) are connected to the retainer plate (5) with an arrangement for allowing vertical movement of the plate (17) during the drilling of a hole.

3. An apparatus (1) according to claim 2, **characterized in that** the arrangement comprises a spring (19).

4. An apparatus (1) according to claim 2, **characterized in that** the arrangement comprises a hydraulic system.

5. An apparatus (1) according to any of the claims 1-4, **characterized in that** the bridge connector (18) is connected to the plate with a flexible connection member.

6. An apparatus (1) according to any of the claims 1-5, **characterized in that** it comprises a Global Position System unit.

7. An apparatus (1) according to any of the claims 1-6, **characterized in that** the handle (2) is formed by a light-weight material.

8. A method for drilling holes by means of an apparatus (1) according to the invention,
**characterized in that** drilling of a hole is performed by means of the following steps:
- the tread plate (8) with angularly adjustable lower parts (11) of the control means (3) are placed on the position where the hole is to be drilled;
- the handle (2) is adjusted so that the cutter head (12) is positioned vertically, as the operator places one or both of his feet on the tread plate (8);
- the drive motor is activated, and a reciprocating cutter movement of the cutter head (12) is started;
- by moving the handle (2) downwards, the operator presses the cutter head (12) down into the earth until a desired depth has been reached, and the drive motor is stopped;
- the apparatus (1) is lifted so that the cutter head (12) containing the drilled plug of earth is lifted off the ground.

9. A method according to claim 8, **characterized by** the following additional steps:
- the apparatus (1) is positioned vertically above an existing hole so that at least the lower part of the cutter head (12) protrudes down into the existing hole and the operator places one or both of his feet on the tread plate (8);
- by moving the handle (2) upwards the plate (17) will eject the earth plug into the existing hole;
- the apparatus (1) is removed and the surface of the earth plug is levelled with the surrounding green.
